# EUROPÄISCHE PATENTANMELDUNG

(11) **EP 4 711 641 A1**
(43) Veröffentlichungstag der Anmeldung: **18.03.2026**
(21) Anmeldenummer: 25202045.8
(22) Anmeldetag: 15.09.2025
(51) Int. Cl.: F16G 1/06, F16G 5/20, F16G 5/04

(54) **NACHHALTIGER ANTRIEBSRIEMEN**

(30) Priorität: 16.09.2024 DE 102024208810
(71) Anmelder: ContiTech Deutschland GmbH, 30175 Hannover (DE)
(72) Erfinder: Dr. Koo, Juny, 30175 Hannover (DE); Gaska, Roman, 30175 Hannover (DE); Dr. Jonczyk, Patrick, 30175 Hannover (DE)
(74) Vertreter: Preusser, Andrea

(57) **Zusammenfassung**

Die Erfindung betrifft einen Antriebsriemen, insbesondere einen Keilriemen oder einen Keilrippenriemen, mit einem Grundkörper aus einem polymeren Werkstoff mit elastischen Eigenschaften, umfassend eine Decklage als Riemenrücken sowie einen Unterbau mit einer Kraftübertragungszone, wobei der polymere Werkstoff mit elastischen Eigenschaften auf einer vernetzten Kautschukmischung basiert, dadurch gekennzeichnet, dass die vernetzte Kautschukmischung bis zu 100 phr eines nachhaltigen kohlenstoffhaltigen Materials (SCM) mit einer Partikelgröße von D97 < 15 µm gemessen nach ISO 13320:2020 umfasst. Der erfindungsgemäße Antriebsriemen hat eine verbesserte Nachhaltigkeit, geäußert durch einen reduzierten CO2-Fußabdruck, und gleichzeitig eine sehr gute Lebensdauer.

## Beschreibung

Die Erfindung betrifft einen Antriebsriemen mit einem Grundkörper aus einem polymeren Werkstoff mit elastischen Eigenschaften, umfassend eine Decklage als Riemenrücken sowie einen Unterbau mit einer Kraftübertragungszone, wobei der polymere Werkstoff mit elastischen Eigenschaften auf einer vernetzten Kautschukmischung basiert.

Antriebsriemen sind dem Grunde nach bekannt und finden vielseitige Anwendung, z.B. für Automobil- oder industrielle Anwendungen. Antriebsriemen, die auch als Kraftübertragungsriemen bezeichnet werden und im Funktionszustand zumeist endlos geschlossen sind, können als Flachriemen, Keilriemen, Keilrippenriemen, Zahnriemen und Kupplungsriemen ausgebildet sein. Von besonderer Bedeutung sind der Keilrippenriemen und der Zahnriemen. Die Elastizität eines Antriebsriemens wird dadurch erreicht, dass der Grundkörper und somit die Decklage und der Unterbau aus einem polymeren Werkstoff mit elastischen Eigenschaften bestehen, wobei hier insbesondere die beiden Werkstoffgruppen Elastomere und thermoplastische Elastomere zu nennen sind. Von besonderer Bedeutung sind Elastomere auf der Basis einer vulkanisierten Kautschukmischung. Beispiele für Riemen und generelle Informationen zum technologischen Hintergrund sind beispielsweise in der DE 102020216256 A1, der DE 102019212077 A1, der DE 102019215983 A1 oder der DE 102007062285 A1 offenbart.

Im Zuge der fortschreitenden technologischen Entwicklung werden auch an die eingesetzten Riemen immer stärkere Anforderungen gestellt. Insbesondere besteht ein steter Bedarf nach leistungsfähigen Riemen, welche insbesondere für den Einsatz in Hochleistungsanwendungen geeignet sind. Eine wichtige Rolle spielen dabei Riemen, die aus vernetzten Kautschukmischungen (sog. "vulkanisierte Riemen") bestehen. Zu den besonders wünschenswerten Leistungseigenschaften dieser Riemen gehört neben z.B. der Zugdehnung, Zugfestigkeit und Härte in erster Linie auch eine lange Lebensdauer.

Neben der Kautschukmatrix ist der Füllstoff, z.B. Ruß, ein Hauptbestandteil von vernetzten Kautschukmischungen. Dieser wird der noch unvernetzten bzw. unvulkanisierten bzw. rohen Kautschukmischung notwendigerweise zugesetzt, um das Eigenschaftsprofil des entsprechenden Elastomerartikels an die Anforderungen anzupassen. Herkömmlicher Ruße, die als Füllstoffe eingesetzt werden, werden allerdings aus schweren Erdölprodukten gewonnen. Öl ist ein fossiler Rohstoff, der nicht in unendlicher Menge zur Verfügung steht. Die Weiterverarbeitung in Raffinerien ist energieintensiv und setzt unter Umständen große Mengen an Kohlendioxid frei, das für die zunehmende Erderwärmung verantwortlich gemacht wird.

Die Aufgabe der vorliegenden Erfindung liegt nun darin, die Nachhaltigkeit von Antriebsriemen, insbesondere Keilriemen und Keilrippenriemen, zu erhöhen und dabei die mechanischen Eigenschaften des resultierenden Werkstoffs, insbesondere die Lebensdauer des Antriebsriemens, insbesondere des Keilriemens oder Keilrippenriemens, zu erhalten.

Gelöst wird diese Aufgabe durch die Bereitstellung eines Antriebsriemens gemäß Anspruch 1.

Erfindungsgemäß wird ein Antriebsriemen, insbesondere ein Keilriemen oder ein Keilrippenriemen, bereitgestellt, der aus einem Grundkörper aus einem polymeren Werkstoff mit elastischen Eigenschaften gebildet wird. Dieser umfasst eine Decklage als Riemenrücken sowie einen Unterbau mit einer Kraftübertragungszone, wobei der polymere Werkstoff mit elastischen Eigenschaften auf einer vernetzten Kautschukmischung basiert.

Im Sinne der Erfindung entspricht eine vernetzten Kautschukmischung einem Elastomer bzw. einem Material mit elastischen Eigenschaften. Neben dem Hauptbestandteil Kautschuk umfasst die Kautschukmischung übliche Additive, die eine Eignung des resultierenden Elastomers als Grundkörper eines Antriebsriemens sicherstellen.

Weitere Mischungsingredienzien sind zumeist noch Vernetzungsmittel, wie bspw. Schwefel, Schwefelspender oder Peroxide, Verarbeitungshilfsmittel, Weichmacher, Alterungsschutzmittel sowie gegebenenfalls weitere Zusatzstoff (z.B. Farbpigmente). Diesbezüglich wird auf den allgemeinen Stand der Kautschukmischungstechnologie verwiesen.

Grundsätzlich können alle der fachkundigen Person bekannten Kautschuke verwendet werden. Beispielhafte Kautschuke sind Ethylen-Propylen-Mischpolymerisat (EPM) oder Ethylen-Propylen-Dien-Kautschuk (EPDM) oder Nitrilkautschuk (NBR) oder (teil)hydrierter Nitrilkautschuk (HNBR) oder Naturkautschuk (NR), Chloropren (CR) oder Polyepichlorhydrin (ECO). Die genannten Kautschuke können hierbei allein oder im Verschnitt, d.h. als Blend, eingesetzt werden.

In bevorzugten Ausführungsformen umfasst die vernetzte Kautschukmischung einen EPDM, EPM oder eine Mischung daraus umfasst. Besonders vorteilhaft in Bezug auf die mechanischen Eigenschaften ist es, wenn mehr als 50 phr, vorzugsweise mehr als 80 phr, am meisten bevorzugten mindestens 100 phr eines EPDMs, EPMs oder einer Mischung daraus in der vernetzten Kautschukmischung enthalten sind.

Insbesondere wegen der besseren Haltbarkeit bevorzugt für die Verwendung in Antriebsriemen ist EPDM Kautschuk. Der Anteil an Doppelbindungen in dem EPDM ist grundsätzlich frei wählbar, indem die Art und Menge der Dien-Komponente ausgewählt wird. Als besonders geeignet zur Verwendung im Antriebsriemen erwies sich ein EPDM mit einem ENB-Anteil von mindestens 2 Gew.-% bezogen auf das Gewicht des Rohkautschuks. Durch die hohe Dien-Komponente lässt sich ein hoher Vernetzungsgrad erreichen und damit die mechanische Stabilität des Elastomerprodukts einstellen. In peroxidisch vernetzten Elastomeren ist ein hoher Vernetzungsgrad auch bei geringen ENB-Anteilen erzielbar. In solchen Fällen dient der ENB-Anteil zur Einstellung der gewünschten mechanischen Eigenschaften. In bevorzugten Ausführungsformen ist der EPDM peroxidisch vernetzt.

Der erfindungsgemäße Antriebsriemen ist dadurch gekennzeichnet, dass die vernetzte Kautschukmischung bis zu 100 phr eines nachhaltigen kohlenstoffhaltigen Materials (SCM, *Sustainable Carbeneous Material)* mit einer Partikelgröße von D97 kleiner als 15 µm, vorzugsweise von D97 = (gleich) 9 bis 13 µm, gemessen nach ISO 13320:2020 umfasst. Überraschenderweise wurde festgestellt, dass der mindestens teilweise Ersatz von herkömmlichen, erdölbasierten Rußen durch solche SCM in Antriebsriemen den ökologischen Fußabdruck des Produkts erheblich reduziert, die mechanischen Eigenschaften, insbesondere die Lebensdauer der Riemen, jedoch nicht negativ beeinflusst.

Vorzugsweise ist das SCM ein pyrolisiertes Produkt aus mechanischen Gummiwaren, z.B. Altreifen oder Altfördergurten, ist. Das SCM unterscheidet sich von herkömmlichen Rußen in erster Linie durch den deutlich reduzierten Kohlenstoffanteil, der bei Industrierußen nahe 100 Massen-% liegt und bei SCMs i.d.R. unter 95 Gew.-%. Das SCM kann zum Beispiel ein wiedergewonnener Ruß (Synonyme sind z.B. "recovered carbon black" oder Pyrolyseruß) sein. Dieser hat einen Kohlenstoffanteil von ca. 88 - 92 Gew.-%. In bevorzugten Ausführungsformen handelt es sich um einen SCM, das einen Kohlenstoffanteil von höchstens 83 Gew.-% umfasst. Vorteilhaft ist ein SCM mit einem Aschegehalt von 17 Gew.-% bis 23 Gew.-%. Der Aschegehalt enthält hauptsächlich anorganische Substanzen, die in dem pyrolysierten Gummiwerkstoff als Füllstoff dienten (z.B. Kalk, Kieselsäure).

Die vernetzte Kautschukmischung umfasst vorzugsweise 1 bis 50 phr, vorzugsweise 2 bis 20 phr, weiter bevorzugt 5 bis 15 phr, eines zuvor genannten SCMs. Alternativ oder ergänzend umfasst die vernetzte Kautschukmischung höchstens 50 phr, vorzugsweise höchstens 40 phr, am meisten bevorzugt höchstens 30 phr eines erdölbasierten, nicht wiedergewonnenen Rußes. Auf diese Weise lässt sich der beste Kompromiss zwischen Nachhaltigkeit und mechanischen Eigenschaften in einem Antriebsriemen erzielen.

Eine Lebenszyklusanalyse, die gemäß ISO 14040 und ISO 14044 durchgeführt wurde, zeigt, dass durch den Ersatz des herkömmlichen Rußes durch SCMs bei voller Kapazität 228.000 Tonnen direkter und indirekter CO₂-Emissionen pro Jahr im Vergleich zum herkömmlichen Rußverfahren eingespart werden.

### Beispiele:

Die Erfindung wird anhand der nachfolgenden nicht beschränkenden Beispiele verdeutlicht.

Verglichen wurden zwei Elastomermischungen, die für die Verwendung als Grundkörper in einem Keilrippenriemen vorgesehen sind. Für die erfindungsgemäße Mischung (Mischung 2) wurde als Kautschukbasis ein EPDM-Kautschuk sowie ein maximaler Anteil an SCM in Kombination mit einem Ruß mittlerer Verstärkung (N550) verwendet. Das verwendete SCM hat eine Partikelgröße von D97 = 11 µm und einen Asche-Gehalt von 22 Gew.-%. Demgegenüber steht eine Referenzmischung (Mischung 1), die ebenfalls auf einer EPDM-Kautschuk basiert und nur den herkömmlichen Ruß N550 umfasst. Insgesamt wurden in der Mischung 2 20 Gew-% (entspr. 45phr) des herkömmlichen Rußes durch SCM als Füllstoff ersetzt. Aufgrund der gröberen Körnung des SCM im Vergleich zu dem hier verwendeten Ruß N550 wurde ein kleiner Anteil an Ruß durch einen größeren Anteil an SCM ausgetauscht, um vergleichbare physikalische Eigenschaften zu erreichen.

**Tabelle 1: Zusammensetzung der verwendeten Mischungen (alles in phr; parts per hundred rubber)**

| | Mischung 1 (Referenz) | Mischung 2 |
|---|---|---|
| Keltan 6950 | 100 | |
| Ruß (N550) | 65 | 30 |
| SCM | 0 | 45 |
| Weichmacher | 15 | 15 |
| Vernetzungssystem (Peroxidisch) | 7 | 7 |
| Sonstige Additive (Alterungsschutzmittel, Verarbeitungshilfsmittel, etc) | 29 | 29 |

Zur Bestimmung der physikalischen Eigenschaften (Tabelle 2) wurden aus den Mischungen Prüfkörper hergestellt. Die Prüfkörper wurden in einer Laborpresse zur Vulkanisation bei erhöhtem Druck hergestellt. Die Prüfungen erfolgten für die Härte gemäß DIN 53505. Die Festigkeit, Dehnung und Spannungswerte gemäß DIN 53504, DIN 53455 und DIN53571.

**Tabelle 3: Physikalische Eigenschaften**

| | Mischung 1 (Referenz) | Mischung 2 |
|---|---|---|
| Härte auf Rippenseite [Shore A] | 82-84 | 82-84 |
| Max. Festigkeit längs [MPa] | 23,8 | 18,8 |
| Max. Festigkeit quer [MPa] | 21 | 17,3 |
| Max. Dehnung längs [%] | 265,9 | 228 |
| Max. Dehnung quer [%] | 253,1 | 239 |
| Spannungswert 50% längs [MPa] | 3 | 3,7 |
| Spannungswert 100% längs [MPa] | 6,8 | 8,2 |

Die Daten aus den Zugprüfungen zeigen vergleichbare Werte zur Serienmischung. Auch die Shorehärtewerte sind im vergleichbaren Bereich.

Es wurden außerdem übliche Keilrippenriemen aus erfindungsgemäßen Mischungen (KRR1 und KRR2) sowie nach herkömmlichen Rezepturen (Referenz) hergestellt. Diese wurden auf Lebensdauer auf dem NSP-Prüfstand und dem HBW-Prüfstand bei einer Umgebungstemperatur von 130°C geprüft.

Auf den NSP-Prüfstand läuft der Riemen bei der Antriebsdrehzahl n1 von 5000 Umdrehungen pro Minute über 5 Riemenscheiben. d1 = d5 = Ø120mm, d2 = d4 = Ø 50mm, Rückenrollendurchmesser: d3 = Ø 65mm. Dabei wird der Riemen mit einem Lastmoment ML von 22,8 Nm und einer Achskraft FA von 660 N belastet.

Auf den HBW-Prüfstand nach SAE J2432 Nov2021 (6. FIVE PULLEY FLEX TEST) wurde die Riemenlänge 1328mm verwendet.

**Tabelle 4: Lebensdauer von Keilrippenriemen**

| | Referenz | KRR1 | KRR2 |
|---|---|---|---|
| Lebensdauer bzgl. NSP130 [h] | 150 | 154 | 161 |
| Lebensdauer bzgl. HBW130 [h] | 200 | 308 | 214 |

Die erfindungsgemäßen Riemen erreichten auf dem NSP-Prüfstand 154 h und 161 h bevor die Riemen An- und Ausbrüche aufwiesen und ausfielen. Auf dem HBW-Prüfstand erreichten die Riemen 308 h und 214 h ohne Defekte.

Den Ergebnissen ist zu entnehmen, dass die Verwendung des nachhaltigeren Riemens durch den teilweisen Ersatz des Industrierußes zwar den ökologischen Fußabdruck des Riemens reduziert, sich aber nicht negativ auf die mechanischen Eigenschaften, insbesondere Lebensdauer, auswirkt.

## Patentansprüche

1. Antriebsriemen mit einem Grundkörper aus einem polymeren Werkstoff mit elastischen Eigenschaften, umfassend eine Decklage als Riemenrücken sowie einen Unterbau mit einer Kraftübertragungszone, wobei der polymere Werkstoff mit elastischen Eigenschaften auf einer vernetzten Kautschukmischung basiert,
**dadurch gekennzeichnet, dass** die vernetzte Kautschukmischung bis zu 100 phr eines nachhaltigen kohlenstoffhaltigen Materials (SCM) mit einer Partikelgröße von D97 < 15 µm gemessen nach ISO 13320:2020 umfasst.

2. Antriebsriemen nach Anspruch 1, wobei die vernetzte Kautschukmischung bis zu 50 phr eines SCMs mit einer Partikelgröße von D97 < 15 µm gemessen nach ISO 13320:2020 umfasst.

3. Antriebsriemen nach einem der Ansprüche 1 oder 2, wobei das SCM eine Partikelgröße von D97 = 9 bis 13 µm gemessen nach ISO 13320:2020 umfasst.

4. Antriebsriemen nach einem der Ansprüche 1 bis 3, wobei die vernetzte Kautschukmischung einen EPDM, EPM oder eine Mischung daraus umfasst.

5. Antriebsriemen nach Anspruch 4, wobei die vernetzte Kautschukmischung mehr als 50 phr eines EPDMs, EPMs oder einer Mischung daraus umfasst.

6. Antriebsriemen nach einem der Ansprüche 1 bis 5, wobei die Kautschukmischung peroxidisch vernetzt wurde.

7. Antriebsriemen nach einem der Ansprüche 1 bis 6, wobei das SCM ein pyrolisiertes Produkt aus Altreifen und/oder Altfördergurten ist.

8. Antriebsriemen nach einem der Ansprüche 1 bis 7, wobei die vernetzte Kautschukmischung höchstens 50 phr, vorzugsweise höchstens 40 phr, am meisten bevorzugt höchstens 30 phr eines erdölbasierten, nicht wiedergewonnenen Rußes umfasst.

9. Antriebsriemen nach einem der Ansprüche 1 bis 8, wobei das SCM einen Kohlenstoffanteil von höchstens 85 Gew.-% umfasst.

10. Antriebsriemen nach einem der Ansprüche 1 bis 9, wobei der Antriebsriemen ein Keilriemen oder ein Keilrippenriemen ist.
